Europäisches Patentamt

European Patent Office

Office européen des brevets

(19)

(11) Numéro de publication : **0 426 569 B1**

## (12) FASCICULE DE BREVET EUROPEEN

(45) Date de publication du fascicule du brevet :
**16.12.92 Bulletin 92/51**

(21) Numéro de dépôt : **90403088.9**

(22) Date de dépôt : **31.10.90**

(51) Int. Cl.⁵ : **G01T 1/164**

(54) **Gamma caméra équipée d'un cône sténope pour une acquisition de type photographique.**

(30) Priorité : **02.11.89 FR 8914357**

(43) Date de publication de la demande :
**08.05.91 Bulletin 91/19**

(45) Mention de la délivrance du brevet :
**16.12.92 Bulletin 92/51**

(84) Etats contractants désignés :
**BE DE GB LU NL**

(56) Documents cités :
**JOURNAL OF NUCLEAR MEDICINE, vol. 15,
no. 2, février 1974, pages 59-64, New York, US;
R.A. MOYER: "A low-energy multiholeconverging collimator compared with a pinhole collimator"**

(73) Titulaire : **SOPHA MEDICAL
9, Place de la Madeleine
F-75008 Paris (FR)**

(72) Inventeur : **de la Barre, François
Cabinet Ballot-Schmit, 7, rue Le Sueur
F-75116 Paris (FR)**
Inventeur : **Pare, Christian
Cabinet Ballot-Schmit, 7, rue Le Sueur
F-75116 Paris (FR)**

(74) Mandataire : **Schmit, Christian Norbert Marie
et al
Cabinet Ballot-Schmit 7, rue Le Sueur
F-75116 Paris (FR)**

## Description

L'invention se rapporte au domaine de l'imagerie médicale, et plus particulièrement à une gamma caméra ou caméra à scintigraphie équipée d'un cône sténopé pour l'acquisition des images de type "photographique". Classiquement, pour obtenir des images médicales par scintigraphie, un produit traceur contenant un isotope radioactif est injecté au patient et se fixe préférentiellement dans l'organe à observer. Ces rayons gamma émis par l'isotope radioactif sont captés par un système d'acquisition d'images du type gamma caméra.

Pour une acquisition d'images classique, ce système de formation d'images comporte un collimateur captant ce rayonnement émis selon une direction, suivi d'un scintillateur associé à un ensemble détecteur.

Pour une acquisition d'images de type photographique, le collimateur du rayonnement gamma est remplacé par un cône sténopé, c'est à dire fermé par un embout tungstène au centre duquel un trou permet de ne laisser passer qu'une partie du rayonnement gamma émis par la zone observée, le cône étant par ailleurs isolant au rayonnement gamma émis par le reste du corps. Ainsi une image ponctuelle de la concentration en isotope radioactif de la zone observée est formée par ce trou formant "objectif", et le scintillateur placé à la base du cône permet alors de former une image agrandie sur l'ensemble détecteur. La résolution est ainsi meilleure qu'avec une acquisition classique, et la précision est d'autant meilleure que le trou dans l'embout est petit.

En général un même appareil peut-être équipé soit d'un collimateur classique formant une image 1/1 de la zone observée, soit d'un cône sténopé. Les caractéristiques du cône sont difficiles à optimiser. En effet, selon le produit injecté, l'énergie du rayonnement gamma émis est variable dans une grande gamme. Pour arrêter un rayonnement "basse" énergie, un cône constitué de plomb d'épaisseur 7mm est suffisant, mais pour arrêter un rayonnement "haute" énergie, l'épaisseur de plomb nécessaire pour le cône atteint 20mm. Plusieurs modèles de cônes sténopés peuvent donc être prévus pour un même appareil, suivant l'énergie du rayonnement émis, elle-même dépendant du produit injecté.

Ces éléments interchangeables sont lourds et des machines sont nécessaires pour les déplacer : un collimateur classique ou un cône sténopé a couramment un poids de l'ordre de 100 Kgs (le poids total d'une gamma caméra est de l'ordre de 1,5 tonnes). En effet, même pour le cône basse énergie, compte tenu du fait que l'ensemble de la caméra doit être équilibré, des contrepoids sont prévus. Or ces contrepoids sont en général installés une fois pour toutes. En conséquence, les éléments interchangeables, collimateur et cônes doivent avoir à peu près le même poids. Les cônes sont donc munis d'embases concourant à obtenir le poids nécessaire.

L'invention a pour objet une gamma caméra à acquisition de type photographique dont le cône sténopé est adaptable à l'énergie du rayonnement reçu et dont l'installation est beaucoup plus facile que celle à effectuer pour des gamma caméras de même type classiques.

Selon l'invention, le cône sténopé dont peut être équipée la gamma caméra est modulaire et comporte au moins une embase à monter sur le scintillateur de la gamma caméra, et une partie tronconique, séparée de l'embase, de laquelle elle peut-être rendue solidaire par un système de visserie.

De préférence la partie tronconique est elle-même formée de deux troncs de cônes superposables, le premier formant cône bloquant le rayonnement gamma basse énergie, le second formant avec le premier lorsqu'il lui est superposé, un cône bloquant le rayonnement haute énergie, les différents éléments montés successivement rendant la manipulation de l'ensemble beaucoup plus aisée et offrant une grande souplesse d'utilisation pour le manipulateur.

L'invention sera mieux comprise et d'autres caractéristiques apparaîtront à l'aide de la description qui suit, en référence aux figures annexées.

Les figures 1a et 1b représentent un premier mode de réalisation d'une tête de gamma caméra équipée d'un cône sténopé selon l'invention, respectivement en coupe et en vue de dessus.

La figure 2 représente un second mode de réalisation d'une tête de gamma caméra selon l'invention avec un cône en deux parties ;

La figure 3 illustre le même mode de réalisation que sur la figure 2 pour un rayonnement basse énergie.

Comme indiqué ci-dessus, une caractéristique essentielle de la gamma caméra selon l'invention est que son cône sténopé destiné à être monté sur le scintillateur pour remplacer un collimateur, est modulaire. Il comporte au moins deux parties séparables : une embase susceptible d'être montée seule dans un premier temps, comme le sont les collimateurs, et une partie tronconique munie à son extrémité d'un embout tungstène, comme décrit ci-dessus. L'embase a un poids tel que, ajouté au poids du tronc de cône, l'ensemble soit équivalent au poids du collimateur qu'il remplace. Dans un mode plus perfectionné, le tronc de cône est lui-même modulaire et comporte deux troncs de cônes superposables et séparables dont la manipulation est alors beaucoup plus aisée, le montage ne nécessitant plus d'appareils spéciaux.

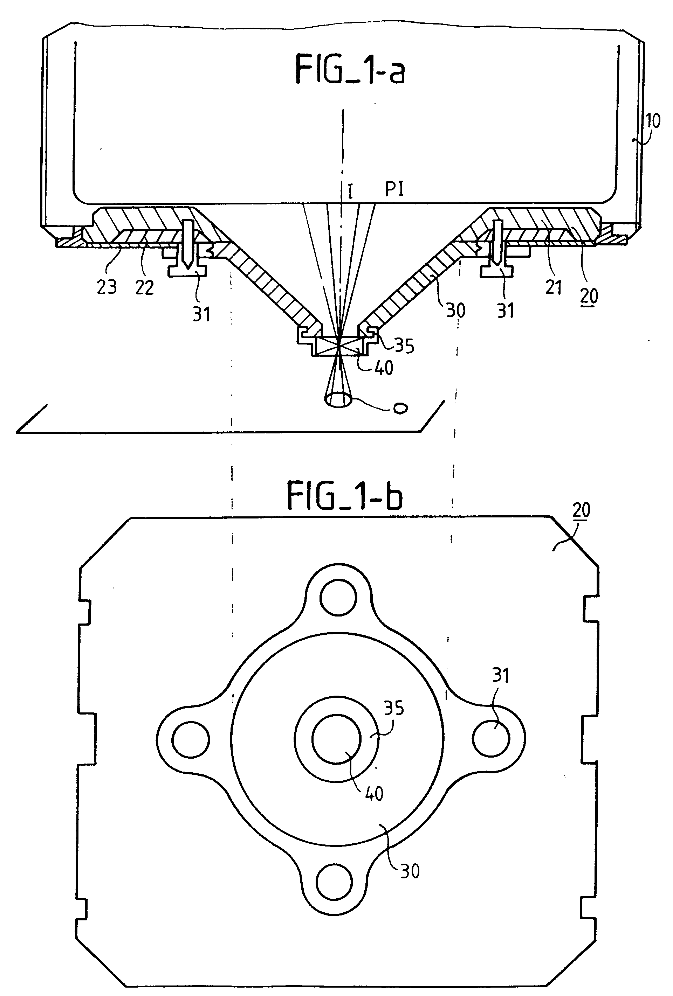

Les figures 1a et 1b représentent la tête de la gamma camera, équipée d'un cône sténopé selon l'invention. Le corps 10 de la tête comporte un scintillateur et un ensemble détecteur non représentés. A son extrémité une embase 20 comportant un cadre de base en plomb 21, une couronne 22, en PVC ou en aluminium par exemple, et une contreplaque 23 en aluminium, est fixée aux montants de la tête 10. Sur cette embase 20, est rapporté un cône 30 en plomb d'épaisseur suffisante pour arrêter le rayonnement gamma de haute énergie. Un système de visserie 31 permet de fixer le cône 30 à l'embase 20. Enfin une bague 35 permet de fermer le tronc de cône 30 par l'embout tungstène 40 percé d'un trou (ou pin-hole).

L'embase 20 est donc une couronne, rectangulaire comme représentée sur la figure 1b, ou circulaire, percée d'un trou et sur laquelle est fixée la base du tronc de cône 30. Cette structure permet de capter à l'intérieur du cône seulement le rayonnement émis par un organe "objet" O, et passant par le trou de l'embout 40, formant objectif, et donc de former sur le plan d'entrée du scintillateur PI, une image I de l'organe O observé, le rayonnement gamma issu des autres parties du corps étant arrêté par le cône.

L'embase 20 étant dissociée du cône 30, peut-être manipulée plus aisément, et notamment être rangée et installée comme les collimateurs des gamma caméras à acquisition classique puisqu'elle a sensiblement le même encombrement. La partie conique peut quant à elle être installée beaucoup plus facilement qu'un cône muni de son embase.

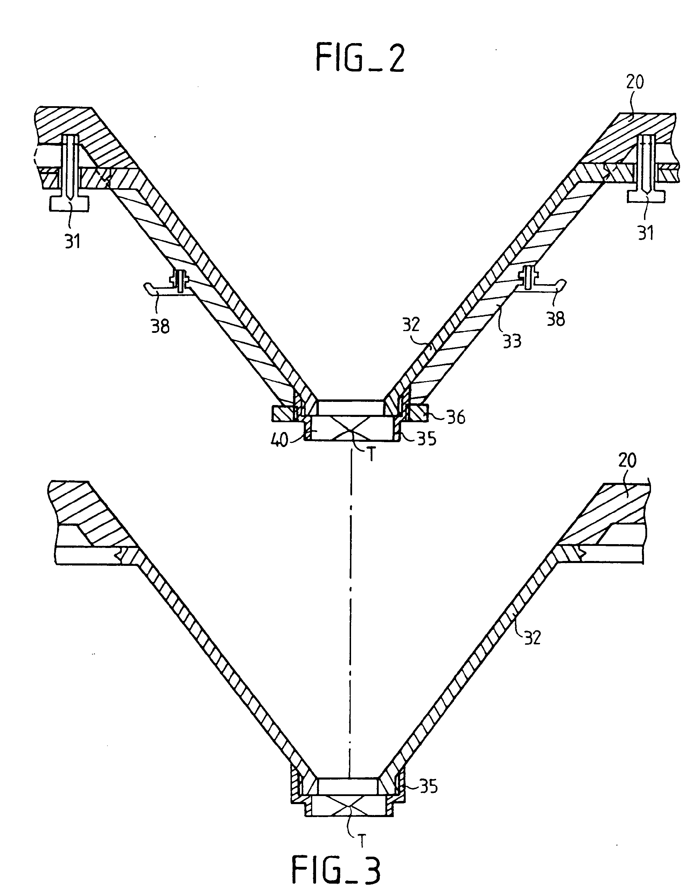

La figure 2 représente un mode de réalisation plus perfectionné du cône sténopé de la gamma caméra. En effet, sur cette figure le cône est formé d'une première partie tronconique 32 formant avec l'embase un ensemble sténopé suffisant pour les basses énergies du rayonnement gamma, son épaisseur étant de l'ordre de 7mm et le matériau le constituant étant de préférence du plomb.

Pour les hautes énergies, une deuxième partie tronconique 33, d'épaisseur 13mm par exemple, et également en plomb est superposée à la première, l'ensemble des deux parties tronconiques 32 et 33 formant un cône d'épaisseur suffisante pour arrêter le rayonnement gamma de haute énergie. L'embase 20, constituée comme précédemment n'est représentée que partiellement sur les figures 2 et 3. La figure 3 représente le cône sténopé pour basse énergie, avec seulement sa partie tronconique d'épaisseur 7mm, 32. Sur ces deux figures, les mêmes éléments sont désignés par les mêmes repères que sur les figures 1a et 1b, notamment le système de visserie 31, permettant de fixer la base de la partie tronconique 32 à l'embase 20, la bague 35 munie de l'embout tungstène 40. Cette bague 35 entoure le sommet du tronc de cône sur lequel elle est vissée. Pour un rayonnement haute énergie, le tronc du cône 33 est glissé sur le premier dans lequel des ergots de positionnement peuvent être prévus. Un écrou 36 est alors vissé sur la bague 35 et vient bloquer le cône 33 en position appuyée sur la base du cône 32. Ces cônes 32 et 33 ont le même angle au sommet et sont exactement superposables. Des poignées, 38 permettent d'enlever facilement le tronc de cône 33 lorsque nécessaire.

A titre d'exemple, dans un mode de réalisation de l'invention, tel que représenté sur les figures 2 et 3, l'embase 20 principalement constituée de plomb a un poids de 70 kgs, le cône basse énergie 32 avec sa base parallèle à l'embase 20 a une masse de 14,5 kgs, et le cône complémentaire 33 pour les hautes énergies une masse de 13kgs, l'ensemble avec les visseries de fixation ayant une masse de 100 kgs environ. Dans cet exemple le poids d'équilibre de la partie collimation est de 91 kgs de sorte qu'avec et sans le cône supplémentaire 33 on approche de plus ou moins 6 kgs ce poids d'équilibre.

L'invention n'est pas limitée aux modes de réalisation précisément décrits et représentés. Le cône sténopé de la gamma caméra selon l'invention est modulaire de façon que son utilisation par le manipulateur soit facile. Dans un mode de réalisation le cône est constitué de deux troncs de cône. Il est aussi possible de prévoir un cône formé de plus de 2 parties si les gammes d'énergie et la facilité d'installation et d'utilisation le justifient.

## Revendications

1. Gamma caméra équipée d'un cône sténopé pour une acquisition de type photographique, caractérisée en ce que le cône sténopé est modulaire et comporte au moins une embase (20) en forme de couronne à monter côté scintillateur sur la tête de la gamma-caméra, cette embase présentant sensiblement le même encombrement qu'un collimateur de gamma caméra à acquisition classique et une partie tronconique 30 séparée de l'embase de laquelle elle peut être rendue solidaire par un système de visserie (31), et portant un embout tungstène (40) dont le trou (T) laisse passer le seul rayonnement gamma destiné à la formation de l'image.

2. Gamma caméra selon la revendication 1, caractérisée en ce que la partie tronconique est formée de deux troncs de cônes superposables, le premier (32), à fixer éventuellement seul à l'embase, adaptée au blocage du rayonnement de basse énergie, le second (33) susceptible d'être superposé au premier ayant une épaisseur telle que la superposition des deux troncs de cônes a une épaisseur adaptée au blocage du rayonnement gamma de haute énergie.

3. Gamma caméra selon la revendication 2, caractérisée en ce que le second tronc de cône (33) est maintenu contre le premier par un écrou (36) bloqué sur une bague (35) portant l'embout tungstène (40), elle même vissée sur le sommet du premier tronc de cône (32).

4. Gamma caméra selon la revendication 2 ou la revendication 3, caractérisée en ce que l'embase et le premier tronc de cône pèsent moins ensemble qu'un poids d'équilibre de la gamma caméra alors que l'embase et les deux troncs de cônes pèsent plus ensemble que ce poids d'équilibre, la différence de poids dans les deux cas entre ce poids d'équilibre et le cône sténopé réalisé étant située dans la plage de tolérance de construction de la gamma caméra.

## Claims

1. Gamma camera equipped with a pin-hole cone for an acquisition of a photographic type, characterized by the fact that the pin-hole cone is modular and comprises at least one shoulder (20) in the form of a crown, to be mounted on the scintillator side of the head of the gamma camera, this shoulder occupying approximately the same amount of space as a conventional gamma camera collimator, and a frustum-shaped part (30) separate from the shoulder with which it can be rendered integral by a system of screw connections (31), and bearing a tungsten end piece (40) of which the hole (T) only gives passage to the gamma ray intended for the formation of the image.

2. Gamma camera in accordance with Claim 1, characterized by the fact that the frustum-shaped part consists of two superimposable cone frustums, the first (32) to be possibly affixed by itself to the shoulder and designed to block the low-energy radiation, while the other (33) can be superimposed on the first, having a thickness such that the superimposition of the two cone frustums has a thickness capable of blocking the high-energy gamma radiation.

3. Gamma camera in accordance with Claim 2, characterized by the fact that the second cone frustum (33) is held against the first by a nut (36) secured on a ring (35) bearing the tungsten end piece (40), the said ring itself being screwed onto the top of the first cone frustum (32).

4. Gamma camera in accordance with Claim 2 or Claim 3, characterized by the fact that the shoulder and the first cone frustum together weigh less than an equilibrium weight of the gamma camera while the shoulder and the two cone frustums together weigh more than this equilibrium weight, the weight difference in the two cases between this equilibrium weight and the pin-hole cone provided being within the constructional tolerance range of the gamma camera.

## Patentansprüche

1. Gammastrahlenkamera mit Lochkonus für photografische Aufnahmen, dadurch gekennzeichnet, daß der Lochkonus modulartig ist und mindestens einen Ansatz (20) in Form eines Kranzes besitzt, der szintillatorseitig an dem Kopf der Gammastrahlenkamera zu montieren ist, wobei der Ansatz im wesentlichen dieselbe Baugröße hat wie ein Kollimator einer Klassischen Gammastrahlenkamera für normale Aufnahmen, und der Konus weiterhin einen kegelstrumpfförmigen Teil (30), der von dem Ansatz getrennt ist, mit dem er durch schrauben (31) verbunden werden kann, und ein Endstück aus Wolfram (40) trägt, dessen Bohrung (T) nur den Durchtritt der Gammastrahlung zuläßt, die das Bild erzeugt.

2. Gammastrahlenkamera nach Anspruch 1, dadurch gekennzeichnet, daß der kegelstumpfförmige Teil durch zwei aufeinander anzuordnende Kegelstümpfe gebildet ist, wobei der erste (32), der wahlweise allein am Ansatz zu befestigen ist, dazu dient, Strahlung mit niedriger Energie abzuschirmen, und wobei der zweite (33), der auf den ersten angeordnet werden kann, eine solche Dicke aufweist, daß die aufeinandergestapelten Kegelstümpfe eine Gesamtdicke haben, die die Abschirmung der Gammastrahlung hoher Energie bewirkt.

3. Gammastrahlenkamera nach Anspruch 2, dadurch gekennzeichnet, daß der zweite Kegelstumpf (33) durch eine Schraubenmutter (36) am ersten Kegelstumpf gehalten wird, die an einem das Endstück aus Wolfram tragenden Ring (35) blockiert ist und die mit der Spitze der ersten Kegelstumpfs (32) verschraubt ist.

4. Gammastrahlenkamera nach Anspruch 2 oder Anspruch 3, dadurch gekennzeichnet, daß der Ansatz und der erste Kegelstumpf zusammen weniger als das Gegengewicht der Kamera wiegen, während der Ansatz und die zwei Kegelstümpfe zusammen mehr als das Gegengewicht wiegen, wobei der Gewichtsunterschied in den zwei Fällen zwischen dem Gegengewicht und dem so zusammengetellten Lochkonus innerhalb des Toleranzbereiches der Konstruktion der Gammastrahlenkammera liegt.

## FIG_1-a

## FIG_1-b

FIG_2

FIG_3